(19) Europäisches Patentamt
European Patent Office
Office européen des brevets

(11) **EP 2 751 923 B1**

(12) **FASCICULE DE BREVET EUROPEEN**

(45) Date de publication et mention
de la délivrance du brevet:
**14.11.2018 Bulletin 2018/46**

(21) Numéro de dépôt: **12761681.1**

(22) Date de dépôt: **03.09.2012**

(51) Int Cl.:
*H02P 9/04* *(2006.01)*    *H02P 9/10* *(2006.01)*
*H02P 9/30* *(2006.01)*    *G05D 17/00* *(2006.01)*
*H02H 7/06* *(2006.01)*    *H02K 19/36* *(2006.01)*

(86) Numéro de dépôt international:
**PCT/IB2012/054533**

(87) Numéro de publication internationale:
**WO 2013/030808 (07.03.2013 Gazette 2013/10)**

(54) **PROCÉDÉ DE RÉGULATION D'UN GROUPE ÉLECTROGÈNE**

VERFAHREN ZUR REGELUNG EINES GENERATORSATZES

METHOD FOR REGULATING A GENERATOR SET

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.09.2011 FR 1157720**

(43) Date de publication de la demande:
**09.07.2014 Bulletin 2014/28**

(73) Titulaire: **Moteurs Leroy-Somer
16000 Angouleme (FR)**

(72) Inventeurs:
• **ANDREJAK, Jean-Marie
F-16710 Saint Yrieix (FR)**

• **MOSER, Samuel
F-16160 Gond-Pontouvre (FR)**
• **BETGE, Patrice
F-16340 L'Isle d'Espagnac (FR)**

(74) Mandataire: **Nony
11 rue Saint-Georges
75009 Paris (FR)**

(56) Documents cités:
**FR-A- 1 322 775        FR-A1- 2 321 796
US-A1- 2010 241 283**

EP 2 751 923 B1

## Description

La présente invention concerne la régulation des alternateurs des groupes électrogènes.

Un groupe électrogène est constitué par l'assemblage d'un moteur thermique et d'un alternateur. Afin de fournir une tension et une fréquence nominales, à la fois le moteur et l'alternateur sont équipés de moyens de régulation. Le moteur thermique est équipé d'un régulateur de vitesse électronique, intégré au système d'injection de carburant du moteur. La régulation de la vitesse du moteur repose entre autres sur la mesure de la vitesse de rotation de l'arbre du moteur, par exemple par un capteur comptant par unité de temps le nombre de dents d'une couronne dentée passant devant le capteur.

Le calculateur d'injection du régulateur de vitesse détermine grâce au signal délivré par ce capteur le niveau d'injection de carburant de façon à maintenir la vitesse à une valeur prédéfinie, mais n'a pas une connaissance directe du niveau de charge qui est appliqué au moteur, car aucun moyen économique n'existe pour informer le calculateur de ce niveau de charge.

Chaque variation de charge appliquée au moteur, que ce soit une augmentation ou une diminution, se traduit par une diminution ou une augmentation transitoire du régime moteur que le régulateur de vitesse tente de corriger par un niveau d'injection adéquat.

Dans les groupes électrogènes connus, c'est seulement grâce à la connaissance de la vitesse et du niveau d'injection que le régulateur détermine le niveau de charge qui est appliqué au moteur.

Le couple $C$ demandé au moteur thermique est directement proportionnel au courant $I$ en sortie de l'alternateur. En effet, la loi de puissance $P$ du moteur thermique est :

$$P = C.w,$$

où $w$ est la vitesse de rotation du moteur.

La loi de puissance $P$ de l'alternateur est :

$$P = U.I.cos(\varphi),$$

où $U$ est la tension de sortie de l'alternateur et $\varphi$ le déphasage entre le courant $I$ et la tension $U$.

Le moteur thermique et l'alternateur étant liés mécaniquement, on peut écrire, au rendement prêt de l'accouplement, que :

$$C.w = U.I.cos(\varphi).$$

Lors de l'application d'une forte charge active, $cos(\varphi)$ devient proche de 1, et la tension de l'alternateur chute. L'alternateur est équipé d'un régulateur de tension qui corrige rapidement cette chute de tension en augmentant le courant dans la roue polaire.

La variation de la charge se traduit également par une chute de vitesse, car le couple $C$ demandé au moteur thermique augmente. Le moteur étant incapable de répondre instantanément à cette demande, sa vitesse $w$ chute, car une partie du couple $C$ est puisée dans la réserve d'énergie cinétique en rotation.

La reprise de vitesse du moteur est essentiellement conditionnée par la rapidité de l'application d'une aide au moteur par le régulateur de tension.

Les moteurs à turbocompresseur sont de plus en plus utilisés au sein des groupes électrogènes. Un inconvénient de ce type de moteur est la dégradation de ses performances si la turbocompression ne peut pas être lancée correctement.

Or, une augmentation brutale de la charge est susceptible de ralentir trop fortement le moteur pour un fonctionnement correct de celui-ci. Lors du fonctionnement à vide, la pression d'admission d'air est proche de la pression atmosphérique mais dès que l'augmentation de la charge est appliquée au groupe électrogène, la vitesse du moteur chute à un tel point que, malgré la réaction du régulateur de vitesse sur le système d'injection, le flux de gaz d'échappement n'est pas suffisant pour lancer la ou les turbines des turbocompresseurs à leur régime de fonctionnement. Ces derniers sont alors incapables de faire augmenter la pression d'admission, nécessaire pour que le moteur soit capable d'accélérer et de retrouver sa vitesse nominale. Il existe donc un point de non-retour qu'il faut éviter d'atteindre.

De façon connue, l'aide au moteur est appliquée lorsque le moteur thermique a déjà chuté en vitesse et que sa vitesse est descendue en dessous d'une certaine valeur.

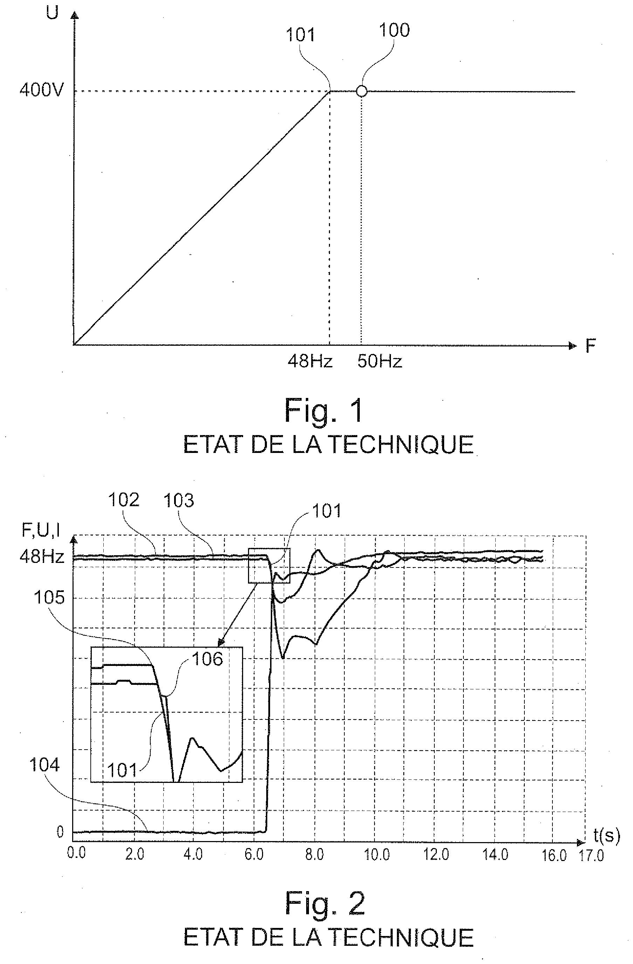

Le point de fonctionnement nominal 100 d'un groupe électrogène selon l'art antérieur est représenté sur la courbe de la figure 1, correspondant par exemple comme illustré à une tension nominale $U_n$ en sortie de l'alternateur égale à 400 V et une fréquence nominale $F_n$ égale à 50 Hz.

Lorsqu'une augmentation de la charge a lieu, la vitesse $w$ du moteur thermique chute, la fréquence $F$ atteignant une valeur seuil de par exemple 48 Hz en un point 101, appelé « coude ». Dans la solution connue, l'aide au moteur est alors appliquée, permettant, selon diverses méthodes, de délester le moteur afin qu'il retrouve sa vitesse de consigne le plus rapidement possible.

Le fait de n'appliquer l'aide au moteur qu'après que le moteur a déjà chuté en vitesse est pénalisant car le moteur aura plus de difficultés pour, entre autres, lancer ses turbocompresseurs, le flux de gaz d'échappement s'en trouvant diminué, et pour retrouver une pression d'admission adaptée à la reprise de vitesse. En outre, entre le point de fonctionnement nominal 100 et le point 101, le couple demandé au moteur a augmenté, le régulateur de tension ayant répondu à la loi de régulation permettant de garder la tension *U* constante.

Trois courbes 102, 103 et 104 en fonction du temps *t,* exprimé en secondes, sont représentées à la figure 2, la courbe 102 représentant la fréquence *F* liée à la vitesse *w* du moteur thermique, la courbe 103 représentant la tension *U* de sortie de l'alternateur et la courbe 104 représentant le courant *I.*

La tension U, comme illustré dans la partie agrandie des courbes 102, 103 et 104, ne chute qu'après que la fréquence *F* soit passée en dessous du point 101. Ce retard de réaction est défavorable à la reprise de vitesse du moteur.

Les critères couramment demandés pour les groupes électrogènes sont entre autres les critères G2 de la norme ISO 8528. Ces critères définissent entre autres le pourcentage de charge à appliquer au groupe électrogène par rapport à sa puissance nominale pour que ce dernier ne chute pas en dessous de 10 % de sa vitesse nominale et de 20 % de sa tension nominale. Pour un groupe électrogène donné, plus le pourcentage de charge à appliquer est élevé, meilleur est le groupe.

Le retard de réaction de l'aide au moteur connue, fondée sur une mesure de vitesse, ne rend pas le système optimal et ne permet pas au groupe électrogène de contenir sa chute de vitesse, pour de fortes augmentations de la charge, dans les 10 % autorisés par les critères ci-dessus.

La demande US 2007/0228735 divulgue un système de production d'énergie dans lequel un dispositif de contrôle agit sur un générateur pour changer sa tension de sortie en réponse à une variation de la vitesse de rotation.

La demande DE 10 2004 017 087 décrit la régulation de l'injection de carburant dans un moteur au niveau du régulateur de vitesse, par la détection d'une modification de la charge.

Il est connu de la demande FR 2 321 796 de connecter, dans une machine électrique, un circuit résistif à l'inducteur principal, et d'utiliser un dispositif de commutation pour diriger le courant inducteur principal dans ce circuit résistif.

Le brevet FR 1 322 775 décrit un alternateur synchrone comportant un appareil de commande agissant de telle sorte que toute modification du courant continu d'excitation se traduise par une variation de la phase des impulsions de la tension de commande.

La demande DE 10 2004 017 087 décrit la régulation de l'injection de carburant dans un moteur au niveau du régulateur de vitesse, par la détection d'une modification de la charge.

Il est connu du brevet US 5 703 410 de contrôler le courant d'excitation d'un alternateur et l'injection de carburant à partir de la connaissance de la tension redressée en sortie de l'alternateur.

Il est également connu de la demande EP 1 938 447 de commander l'actionneur d'admission de carburant d'un groupe électrogène grâce à un dispositif de contrôle délivrant un signal de commande se substituant à un signal de sortie du régulateur de vitesse lorsqu'une variation de charge est détectée.

La demande US 2010/0241283 divulgue une méthode de régulation modifiant le courant d'excitation en cas d'augmentation de la puissance. Le régulateur de vitesse coopère étroitement avec le régulateur de tension, ce qui implique une conception intégrée du régulateur de tension ou du régulateur de vitesse.

Il existe un besoin pour améliorer encore les performances des groupes électrogènes, notamment lors d'augmentations de la charge, afin entre autres de faciliter l'utilisation de moteurs à turbocompresseur.

L'invention vise à répondre au moins en partie à ce besoin et elle y parvient, selon l'un de ses aspects, grâce à un procédé de régulation de la tension de sortie de l'alternateur d'un groupe électrogène selon la revendication 1.

Grâce à l'invention, le courant dans la roue polaire est diminué de façon adéquate même en cas de faible charge appliquée et le couple du moteur est réduit de manière appropriée pendant la durée nécessaire à l'augmentation de la puissance du moteur.

Le régulateur de tension de l'alternateur peut observer à tout moment le niveau de charge appliqué au groupe électrogène et calculer très rapidement la part de puissance active.

Dans l'invention, la régulation peut se faire ainsi en ayant connaissance de la puissance de la charge appliquée au groupe électrogène. Ainsi, une action corrective peut être appliquée au groupe électrogène dès l'augmentation de la charge. Les performances du groupe électrogène sont augmentées sans autre modification de ses caractéristiques.

La puissance en sortie de l'alternateur peut être déterminée à l'aide d'un capteur de courant mesurant le courant parcourant l'enroulement d'induit principal de l'alternateur et d'une connaissance de la tension en sortie de l'alternateur. Ces informations sont transmises à un calculateur du régulateur de tension de l'alternateur, qui peut calculer la puissance et la variation de la puissance. La puissance peut être calculée avec des grandeurs électriques habituellement connues d'un régulateur de tension.

La détection d'une augmentation de la charge grâce à l'observation de grandeurs électriques permet une anticipation de la chute de vitesse du moteur, et permet de faire baisser, par conséquence de la chute de la tension de sortie de l'alternateur, le courant en sortie de l'alternateur, et ainsi le couple demandé au moteur. La chute de vitesse est limitée de manière efficace.

La modification de la valeur du courant dans la roue polaire, et par voie de conséquence la chute de tension de l'alternateur qui en résulte, peut être fonction du niveau de puissance connu lorsque l'augmentation de la charge est détectée. Connaître le niveau de charge du groupe électrogène est utile, l'état du moteur avant l'augmentation de la charge influant sur son comportement lors de l'augmentation de la charge, par exemple sur la pression d'admission.

La modification du courant dans la roue polaire ou de la tension de sortie de l'alternateur peut être fonction, de façon linéaire ou non, de la dérivée par rapport au temps de la puissance en sortie de l'alternateur, cette dérivée pouvant être calculée en permanence, à intervalles réguliers.

L'évolution de la valeur du courant dans la roue polaire ou de la tension de sortie de l'alternateur en fonction de la variation de la puissance en sortie de l'alternateur peut suivre une loi de commande prédéfinie, par exemple préenregistrée dans une table, ou calculée en fonction d'au moins un paramètre, par exemple le niveau de puissance.

La sortie de l'alternateur peut alimenter un réseau triphasé, la vitesse nominale de rotation du moteur thermique étant par exemple de 1500 tr/min et la tension nominale de sortie entre phases de l'alternateur étant par exemple de 400V et 50 Hz.

Pour agir sur le courant dans la roue polaire, il est possible d'agir sur le courant d'excitation de l'excitatrice lorsque l'alternateur comporte une excitatrice ayant un stator bobiné. La modification du courant dans la roue polaire peut s'effectuer par exemple en diminuant le courant d'excitation de l'excitatrice.

Notamment, dans le cas d'un alternateur comportant une excitatrice dont le stator comporte des aimants permanents, il est possible d'agir sur le courant dans la roue polaire en disposant sur le rotor un système de commutation permettant de moduler le courant dans la roue polaire.

Dans une telle variante, l'alternateur peut comporter, au rotor, un contrôleur commandant le système de commutation. Un système de transmission, par exemple sans fil, peut communiquer avec le régulateur de tension situé au stator de l'alternateur.

Le régulateur de tension peut commander le système de commutation de façon à réguler par modulation de largeur d'impulsion de la tension aux bornes de la roue polaire. Le régulateur peut faire varier le rapport cyclique de la modulation de largeur d'impulsion en fonction de la valeur du courant de roue polaire ou de la tension de sortie recherchée. Une telle variante permet d'améliorer le temps de réponse de l'alternateur lorsque la charge varie.

Le procédé de régulation selon l'invention peut se combiner avec d'autres mesures de régulation visant à améliorer le fonctionnement du groupe électrogène, par exemple des mesures visant à modifier le débit de carburant injecté dans le moteur thermique ou la chute de tension de l'alternateur en fonction de la variation de la vitesse de rotation du moteur thermique.

L'invention a encore pour objet, selon un autre de ses aspects, un système de régulation de la tension de sortie de l'alternateur d'un groupe électrogène selon la revendication 7.

Le système de régulation peut comporter un calculateur qui calcule la dérivée de la puissance par rapport au temps et lorsque celle-ci est positive ou supérieure à un certain seuil, commande une diminution de la tension en sortie de l'alternateur afin de diminuer le niveau de couple demandé au moteur thermique, de préférence avant que le moteur n'ait ralenti.

La diminution de la tension qui a lieu peut dépendre du niveau de puissance mesuré avant la variation (état de départ), la correction étant de préférence plus forte aux faibles puissances (moteur à vide) qu'aux fortes puissances (moteur chargé).

Le système de régulation peut être intégré au régulateur de tension de l'alternateur. Le système de régulation peut agir indépendamment d'un échange avec le régulateur de vitesse du moteur thermique. Autrement dit, le régulateur de vitesse du moteur suit une consigne propre, qui n'est ni modifiée ni imposée par le régulateur de tension ou par une information transmise par ce dernier au régulateur de vitesse.

De la même manière, le régulateur de tension ne reçoit, de préférence, aucune information du régulateur de vitesse.

Toutes les caractéristiques de l'invention énumérées ci-dessus pour le procédé valent pour le système de régulation.

L'invention pourra être mieux comprise à la lecture de la description détaillée qui va suivre, d'exemples non limitatifs de mise en oeuvre de celle-ci, et à l'examen du dessin annexé, sur lequel :

- les figures 1 et 2, déjà décrites, représentent des courbes illustrant la régulation d'un groupe électrogène selon l'art antérieur,
- la figure 3 représente un groupe électrogène selon l'invention,
- la figure 4 représente un alternateur selon l'invention,
- la figure 5 représente de façon schématique la chaîne de régulation d'un groupe électrogène selon l'invention, et
- les figures 6 et 7 représentent une variante d'alternateur selon l'invention.

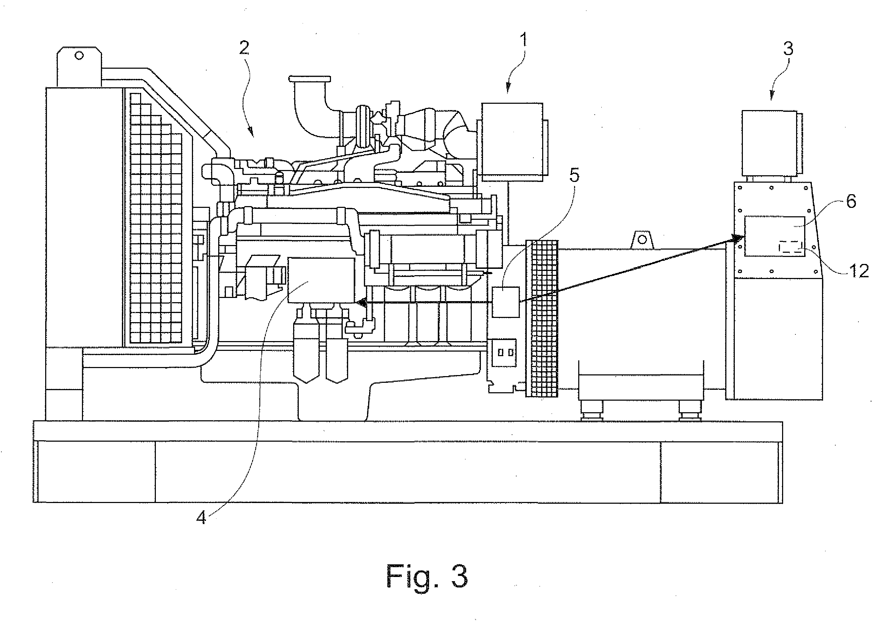

Le groupe électrogène 1 selon l'invention, illustré à la figure 3, comporte un moteur thermique 2 et un alternateur 3.

Le moteur thermique 2 est avantageusement un moteur turbocompressé, mais l'invention n'est pas limitée à un type de moteur thermique particulier.

La sortie de l'alternateur 3 alimente par exemple un réseau triphasé, la vitesse $w_n$ nominale de rotation du moteur thermique 2 étant par exemple de 1500 tr/min, la fréquence nominale $F_n$ étant égale par exemple à 50 Hz, et la tension nominale $U_n$ de sortie entre phases de l'alternateur étant par exemple de 400V.

Le rotor 19 de l'alternateur 3 comporte, dans l'exemple décrit, un redresseur 17 composé d'un pont de diodes double alternance, alimentant à partir de l'induit d'excitatrice 7 un bus continu 23.

L'alternateur 3 comporte au stator 20 un inducteur d'excitatrice 28 et l'enroulement d'induit principal 27 est relié à une charge 30, représentée schématiquement.

Le moteur 2 comporte un régulateur de vitesse 4 comportant un calculateur d'injection qui calcule l'injection de carburant (ou la commande des gaz) du moteur afin que la vitesse de rotation $w$ soit maintenue constante autant que possible à une valeur nominale $w_n$.

Le moteur 2 comporte un capteur 5 de vitesse, pouvant être, par exemple, inductif, capacitif ou optique. Le capteur 5 est par exemple disposé devant une couronne dentée entraînée en rotation par le moteur 2 et délivre au calculateur d'injection des impulsions à une fréquence proportionnelle à la vitesse de rotation $w$.

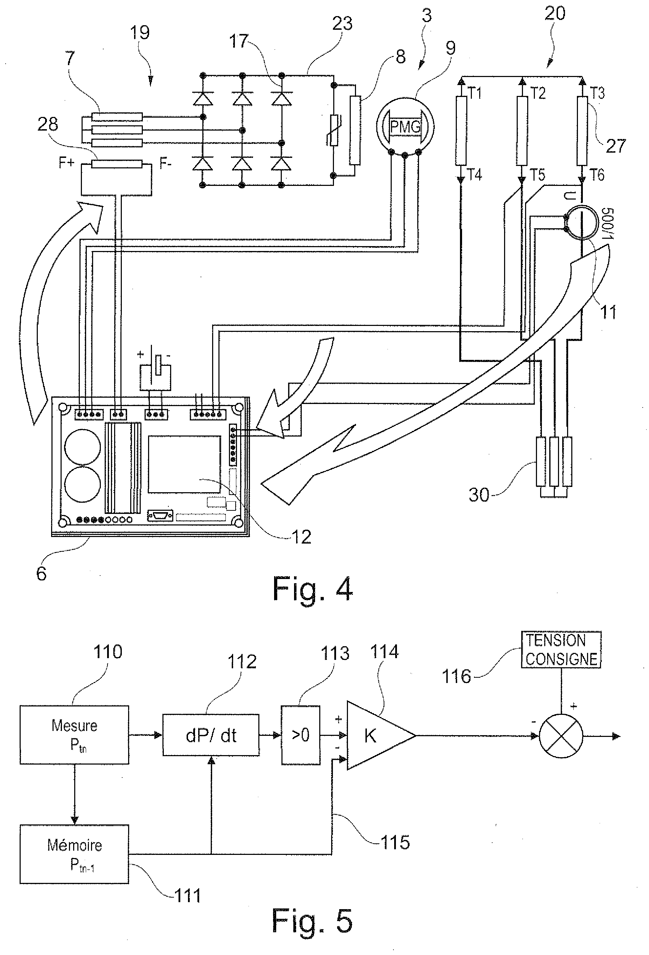

L'alternateur 3 comporte, comme illustré à la figure 4, un régulateur de tension 6 qui comporte un système de régulation de la tension de sortie de l'alternateur 3, agencé pour détecter une augmentation de la charge, à partir de la connaissance de la puissance en sortie de l'alternateur 3.

Le système de régulation calcule la puissance $P$ en sortie de l'alternateur grâce à des informations concernant les grandeurs électriques en sortie de l'alternateur, par exemple la tension U entre phases en sortie de l'alternateur et le courant parcourant l'enroulement d'induit principal 27 du stator 20, ce courant étant déterminé grâce à un capteur 11. Le régulateur de tension 6 peut être alimenté par un générateur à aimants permanents 9 ou par tout autre moyen.

Le système de régulation de tension comporte un calculateur 12, par exemple à microprocesseur, qui détermine le courant à appliquer dans la roue polaire 8 pour maintenir l'amplitude de la tension à une valeur de consigne qui par défaut est la tension nominale $Un$.

Le système de régulation est configuré pour modifier, lorsqu'une augmentation de la puissance est détectée, la valeur du courant dans la roue polaire 8, de manière à amener la tension $U$ de sortie de l'alternateur 3 à une valeur inférieure à celle avant augmentation de la charge.

Comme illustré à la figure 5, la puissance active $P_{tn}$ est mesurée à chaque instant $t_n$ à l'étape 110, la valeur $P_{tn-1}$ mesurée à l'instant $t_{n-1}$ étant enregistrée lors d'une étape 111. La dérivée $dP/dt$ est calculée à l'étape 112.

En fonctionnement nominal, en l'absence de correction à appliquer, c'est-à-dire si $dP/dt$ est nulle ou inférieure à un seuil prédéfini, la chaîne de régulation maintient la tension de l'alternateur à la valeur de consigne 116 qui est la tension nominale.

Si la dérivée de la puissance active $dP/dt$ est positive, une correction K à appliquer à la tension de consigne est déterminée à l'étape 114, en vue de diminuer la tension en sortie de l'alternateur et réduire temporairement le couple demandé au moteur, pour lui permettre d'accélérer plus facilement. Pour réduire la tension de sortie, le régulateur agit sur le courant dans la roue polaire.

La valeur du courant dans la roue polaire est ainsi modifiée en fonction de la dérivée de la puissance active $dP/dt$. L'évolution du courant dans la roue polaire ou de la tension de sortie en fonction de la dérivée de la puissance active $dP/dt$ suit une loi de commande prédéfinie, qui peut être tabulée ou calculée à chaque instant. La loi de commande dépend des moteurs thermiques et de leurs performances.

La modification de la valeur du courant dans la roue polaire 8 et de la tension de sortie de l'alternateur dépend de la variation de la puissance active en sortie de l'alternateur 3, et de préférence également du niveau de puissance active. Ainsi, la correction K peut être modulée en fonction du niveau 115 de puissance active à l'instant $t_{n-1}$.

Ainsi, plus la puissance est élevée, plus la correction peut être faible car le moteur a déjà un régime de fonctionnement qui lui permet de mieux résister aux variations de charge.

Une fois que la puissance du moteur a augmenté et que la vitesse de rotation w augmente, la valeur du courant dans la roue polaire peut à nouveau être modifiée, de manière à ramener la valeur de la tension $U$ de sortie à celle avant augmentation de la charge, jusqu'au point de fonctionnement nominal 100.

Le régulateur de tension 6 peut agir de façon conventionnelle sur le courant d'excitation au stator 20 pour modifier le courant dans la roue polaire et ainsi faire varier la tension $U$.

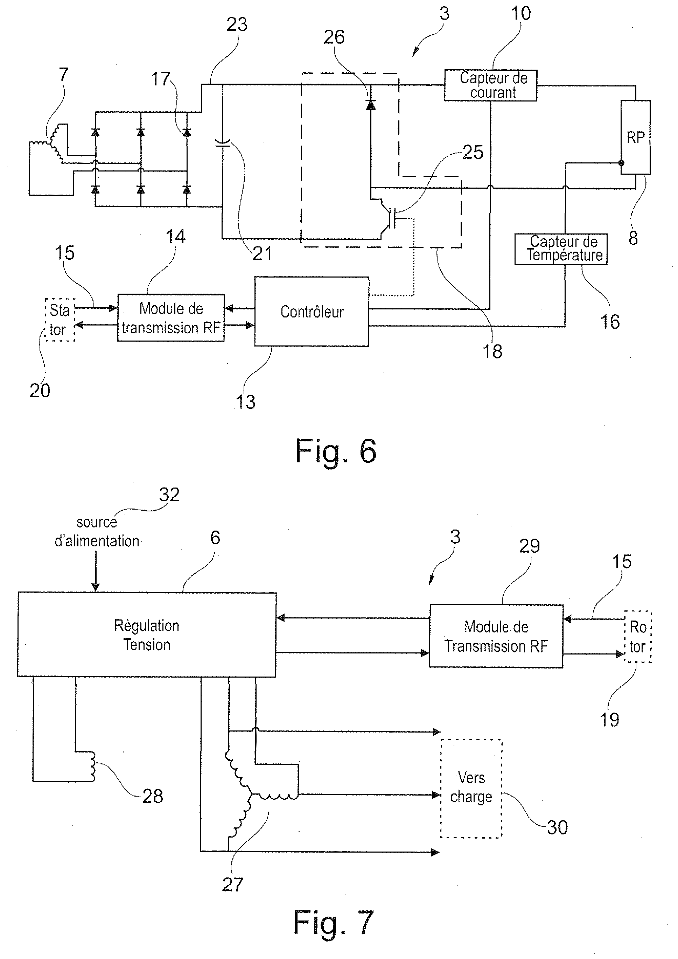

Dans la variante représentée aux figures 6 et 7, le rotor 19 comporte un système de communication embarqué, et le bus continu 23 est relié à un système de commutation 18. Un condensateur de filtrage 21 peut être prévu. D'autres montages avec des systèmes de commutation par thyristor ou triac peuvent être envisagés.

Le système de commutation 18 peut être composé comme illustré d'une diode de roue libre 26 et d'un composant électronique commutable 25, par exemple un transistor IGBT.

Un contrôleur 13 commande le système de commutation 18 de façon à réguler par modulation de largeur d'impulsion la tension dans la roue polaire 8. Le rapport cyclique $\beta$ de la modulation de largeur d'impulsion est fonction entre autres de la tension de sortie de la machine principale, de façon à maintenir autant que possible la tension délivrée par l'alternateur 3 à la valeur souhaitée.

Le rotor 19 comporte dans l'exemple illustré un capteur de courant 10 pour mesurer le courant dans la roue polaire 8. La valeur du courant ainsi mesurée est transmise au contrôleur 13.

Le régulateur de tension 6 au stator 20 est alimenté par une alimentation 32, et l'inducteur d'excitatrice 28 est bobiné, dans l'exemple décrit. Un système de communication sans fil HF est disposé entre le contrôleur 13 du rotor 19 et le régulateur de tension 6 du stator 20 de l'alternateur 3. Le système de communication sans fil est composé d'un module de transmission 14 disposé au rotor 19, d'un module de transmission 29 disposé au stator 20, et de voies de transmission sans fil 15 reliant lesdits modules.

La valeur du courant dans la roue polaire 8, mesurée par le capteur de courant 10 du rotor 19, est transmise au régulateur de tension 6 du stator 20 par le système de communication sans fil 14, 15, 29.

L'invention n'est pas limitée aux exemples qui viennent d'être décrits. Par exemple, l'excitatrice est à aimants permanents, dans une variante de la figure 7, non illustrée.

## Revendications

1. Procédé de régulation de la tension de sortie de l'alternateur (3) d'un groupe électrogène (1), ce dernier comportant un moteur thermique (2) entraînant ledit alternateur, le moteur thermique comportant un régulateur de vitesse (4), l'alternateur (3) comportant un rotor (19) ayant une roue polaire (8) et un système de régulation, le procédé comportant l'étape suivante :

   - le système de régulation détecte une augmentation de la puissance (*P*) en sortie de l'alternateur (3), et en cas d'augmentation détectée, modifie la valeur du courant dans la roue polaire (8), de manière à amener temporairement la tension (*U*) de sortie de l'alternateur (3) à une valeur inférieure à celle avant détection de l'augmentation de la puissance, en vue de diminuer le niveau de couple demandé au moteur thermique, procédé **caractérisé en ce que** le régulateur de vitesse (4) a un fonctionnement totalement autonome de celui du système de régulation de l'alternateur.

2. Procédé selon la revendication 1, dans lequel on détermine la puissance (*P*) en sortie de l'alternateur (3) à l'aide d'un capteur de courant (11) mesurant le courant parcourant l'enroulement d'induit principal (27) de l'alternateur (3) et de la connaissance de la tension (*U*) en sortie de l'alternateur.

3. Procédé selon l'une des revendications précédentes, le moteur thermique (2) étant un moteur turbocompressé.

4. Procédé selon l'une quelconque des revendications précédentes, la modification du courant dans la roue polaire (8) s'effectuant en diminuant le courant d'excitation de l'excitatrice.

5. Procédé selon l'une quelconque des revendications 1 à 3, la modification du courant dans la roue polaire (8) s'effectuant grâce à une modulation de largeur d'impulsion de la tension aux bornes de la roue polaire.

6. Procédé selon l'une quelconque des revendications 1 à 5, la modification de la tension de sortie de l'alternateur étant fonction du niveau de puissance.

7. Système de régulation de la tension (*U*) de sortie de l'alternateur (3) d'un groupe électrogène (1), ce dernier comportant un moteur thermique (2) entraînant ledit alternateur, le moteur thermique comportant un régulateur de vitesse (4), l'alternateur comportant un rotor (19) ayant une roue polaire (8), le système étant configuré pour détecter une augmentation de la puissance en sortie de l'alternateur et modifier la valeur du courant dans la roue polaire (8), de manière à amener la tension (*U*) de sortie de l'alternateur (3) à une valeur inférieure à celle avant détection de l'augmentation, système **caractérisé en ce que** le régulateur de vitesse (4) a un fonctionnement totalement autonome de celui du système de régulation.

8. Système selon la revendication 7, comportant un calculateur qui calcule la dérivée de la puissance active par rapport au temps et, lorsque celle-ci est positive ou supérieure à un certain seuil, commande une diminution de la tension en sortie de l'alternateur afin de diminuer le niveau de couple demandé au moteur thermique.

9. Système selon la revendication 7 ou 8, la diminution de la tension dépendant du niveau de puissance.

10. Système selon l'une quelconque des revendications 7 à 9, comportant un contrôleur (13) tournant avec le rotor et permettant de commander le courant dans la roue polaire par une modulation de largeur d'impulsion de la tension aux bornes de la roue polaire.

## Patentansprüche

1. Verfahren zur Regelung der Ausgangsspannung des Wechselstromgenerators (3) eines Generatorsatzes (1), wobei letzterer einen Verbrennungsmotor (2) umfasst, der den Wechselstromgenerator antreibt, wobei der Verbrennungsmotor einen Geschwindigkeitsregler (4) umfasst, wobei der Wechselstromgenerator (3) einen Rotor (19) mit einem Polrad (8) und einem Regelungssystem umfasst, wobei das Verfahren den folgenden Schritt umfasst:

   - das Regelungssystem detektiert eine Erhöhung der Leistung (*P*) am Ausgang des Wechselstromgenerators (3) und ändert im Falle einer detektierten Erhöhung den Stromwert des Polrads (8), sodass die Ausgangsspannung (*U*) des Wechselstromgenerators (3) zeitweise auf einen Wert gebracht wird, der kleiner als der vor der Detektion der Erhöhung der Leistung ist, um den geforderten Drehmomentpegel an dem Verbrennungsmotor zu verringern,

wobei das Verfahren **dadurch gekennzeichnet ist, dass** der Geschwindigkeitsregler (4) eine Funktionsweise aufweist, die absolut autonom von der des Regelungssystems des Wechselstromgenerators ist.

2. Verfahren nach Anspruch 1, wobei die Leistung (*P*) am Ausgang des Wechselstromgenerators (3) mit Hilfe eines Stromsensors (11), der den durch die Hauptankerwicklung (27) des Wechselstromgenerators (3) fließenden Strom, und der Kenntnis der Spannung (*U*) am Ausgang des Wechselstromgenerators bestimmt wird.

3. Verfahren nach einem der vorangehenden Ansprüche, wobei der Verbrennungsmotor (2) ein aufgeladener Verbrennungsmotor ist.

4. Verfahren nach einem der vorangehenden Ansprüche, wobei die Änderung des Stroms im Polrad (8) erfolgt, indem der Erregerstrom des Erregers verringert wird.

5. Verfahren nach einem der Ansprüche 1 bis 3, wobei die Änderung des Stroms im Polrad (8) dank einer Pulsweitenmodulation der Spannung an den Anschlüssen des Polrads erfolgt.

6. Verfahren nach einem der Ansprüche 1 bis 5, wobei die Änderung der Ausgangsspannung des Wechselstromgenerators vom Leistungspegel abhängt.

7. System zur Regelung der Ausgangsspannung (*U*) des Wechselstromgenerators (3) eines Generatorsatzes (1), wobei letzterer einen Verbrennungsmotor (2) umfasst, die den Wechselstromgenerator antreibt, wobei der Verbrennungsmotor einen Geschwindigkeitsregler (4) umfasst, wobei der Wechselstromgenerator einen Rotor (19) mit einem Polrad (8) umfasst, wobei das System dazu gestaltet ist, eine Erhöhung der Leistung am Ausgang des Wechselstromgenerators zu detektieren und den Stromwert im Polrad (8) so zu ändern, dass die Ausgangsspannung (U) des Wechselstromgenerators (3) auf einen Wert gebracht wird, der kleiner als der vor der Detektion der Erhöhung ist, wobei das System **dadurch gekennzeichnet ist, dass** der Geschwindigkeitsregler (4) eine Funktionsweise aufweist, die absolut autonom von der des Regelungssystems ist.

8. System nach Anspruch 7, umfassend einen Rechner, der die Ableitung der aktiven Leistung im Verhältnis zur Zeit berechnet und, wenn diese positiv oder größer als ein bestimmter Schwellenwert ist, eine Verringerung der Spannung am Ausgang des Wechselstromgenerators befiehlt, um den geforderten Drehmomentpegel an dem Verbrennungsmotor zu verringern.

9. System nach Anspruch 7 oder 8, wobei die Verringerung der Spannung vom Leistungspegel abhängt.

10. System nach einem der Ansprüche 7 bis 9, umfassend eine Steuerung (13), die sich mit dem Rotor dreht und es ermöglicht, den Strom im Polrad durch eine Pulsweitenmodulation der Spannung an den Anschlüssen des Polrads zu steuern.

**Claims**

1. Method for regulating the output voltage of the alternator (3) of a generator set (1), the latter comprising an engine (2) driving said alternator, the engine comprising a speed regulator (4), the alternator (3) comprising a rotor (19) having a pole wheel (8) and a regulation system, the method comprising the following step:

 - the regulation system detects an increase in the power (*P*) at the output of the alternator (3), and in the case that an increase is detected, modifies the value of the current in the pole wheel (8), so as to temporarily bring the output voltage (*U*) of the alternator (3) to a value below that before detection of the increase in the power, with a view to decreasing the torque level demanded of the engine,

 method **characterized in that** the operation of the speed regulator (4) is totally autonomous from that of the alternator regulation system.

2. Method according to Claim 1, in which the power (*P*) at the output of the alternator (3) is determined with the aid of a current sensor (11) measuring the current passing through the main armature winding (27) of the alternator (3) and of the knowledge of the voltage (*U*) at the output of the alternator.

3. Method according to one of the preceding claims, the engine (2) being a turbocharged engine.

4. Method according to any one of the preceding claims, the modification of the current in the pole wheel (8) being performed by decreasing the exciter excitation current.

5. Method according to any one of Claims 1 to 3, the modification of the current in the pole wheel (8) being performed by virtue of a pulse width modulation of the voltage across the terminals of the pole wheel.

**6.** Method according to any one of Claims 1 to 5, the modification of the output voltage of the alternator being dependent on the power level.

**7.** System for regulating the output voltage (*U*) of the alternator (3) of a generator set (1), the latter comprising an engine (2) driving said alternator, the engine comprising a speed regulator (4), the alternator comprising a rotor (19) having a pole wheel (8), the system being configured to detect an increase in the power at the output of the alternator and to modify the value of the current in the pole wheel (8), so as to bring the output voltage (*U*) of the alternator (3) to a value below that before detection of the increase, system **characterized in that** the operation of the speed regulator (4) is totally autonomous from that of the regulation system.

**8.** System according to Claim 7, comprising a computer which computes the derivative of the active power with respect to time and, when the latter is positive or greater than a certain threshold, instructs a decrease in the voltage at the output of the alternator so as to decrease the torque level demanded of the engine.

**9.** System according to Claim 7 or 8, the decrease in the voltage depending on the power level.

**10.** System according to any one of Claims 7 to 9, comprising a controller (13) rotating with the rotor and making it possible to control the current in the pole wheel by a pulse width modulation of the voltage across the terminals of the pole wheel.

Fig. 1
ETAT DE LA TECHNIQUE

Fig. 2
ETAT DE LA TECHNIQUE

9

Fig. 3

Fig. 4

Fig. 5

Fig. 6

Fig. 7

**RÉFÉRENCES CITÉES DANS LA DESCRIPTION**

**Documents brevets cités dans la description**

- US 20070228735 A
- DE 102004017087
- FR 2321796
- FR 1322775
- US 5703410 A
- EP 1938447 A
- US 20100241283 A